# EUROPEAN PATENT APPLICATION

(11) **EP 4 617 706 A1**
(43) Date of publication of application: **17.09.2025**
(21) Application number: 24163256.1
(22) Date of filing: 13.03.2024
(51) Int. Cl.: G01S 7/02, G01S 13/931

(54) **RADAR SYSTEM FOR AUTOMOTIVE APPLICATIONS**

(71) Applicant: Aptiv Technologies AG, 8200 Schaffhausen (CH)
(72) Inventor: IOFFE, Alexander, 8200 Schaffhausen (CH); TORRES AVENDAÑO, Felipe, 8200 Schaffhausen (CH); STEFER, Markus, 8200 Schaffhausen (CH); TORRES, Jairo Escudero, 8200 Schaffhausen (CH); BUSCH, Mathias, 8200 Schaffhausen (CH); RHEINFELDER, Clemens, 8200 Schaffhausen (CH)
(74) Representative: Bardehle Pagenberg Partnerschaft mbB Patentanwälte Rechtsanwälte

(57) **Abstract**

The present disclosure relates to a radar system for automotive applications, in particular for a driver-assistance system of a vehicle. The system comprises a body with at least two side faces, and a separate radar subunit arranged on each one of the at least two side faces of the body. The present disclosure further relates to a vehicle comprising at least one radar system.

## Description

### Technical field

The present disclosure relates to a radar system for automotive applications, in particular for a driver-assistance system of a vehicle. The present disclosure further relates to a vehicle comprising at least one such radar system.

### Technical background

Radar sensors are used in automotive applications (e.g. in motor vehicles such as cars) to provide safety and comfort functions, for example in so-called driver-assistance systems. Motor vehicles are usually equipped with four corner radars to ensure a 360° coverage around the vehicle. Current radar configurations are characterized by a planar structure, i.e. the radar elements are arranged on a planar structure. With such configurations, the Field of View (FOV) in the azimuth is restricted to a maximum of 180°. In practice, physical constraints typically limit the usable azimuth FOV to less than 160°. Car manufactures generally desire radar sensors with an azimuth FOV of more than 180°.

It is particularly desired to use radar sensors for parking assistance systems. For such parking assistance systems, it is desired to detect objects (e.g. bags), animals (e.g. cats), etc. which may be close or even beneath the vehicle, particularly when starting a parked car and driving out of a parking spot. The commonly used radars installed in the bumpers of a vehicle are not suitable for parking assistance systems, as they have significant blind zones under and in the direct vicinity of the vehicle. Extending the elevation FOV of these radars does not resolve this problem.

It is thus an object of the present invention to provide a solution that solves the above problems at least partially. It is a particular object of the present invention to provide a radar system that provides improved azimuth FOV. It is another particular object of the present invention to provide a radar system that allows for detection of objects close or under a vehicle.

A solution is provided according to the subject matter of the independent claims.

### Summary of the invention

An aspect of the present disclosure relates to a radar system for automotive applications. The radar system is particularly suited for a driver-assistance system of a vehicle. The radar system may for example be used to provide input data for a parking assistance system of a motor vehicle. The radar system may comprise respective transmitting and receiving entities with respective antennas, and a control unit, in order to detect objects and determine the distance to the detected objects, as known in the art. The radar system is preferably a multi-piece system, which can be installed as a single element to the vehicle.

The system comprises a body with at least two side faces. For example, the body may have more than two side faces, e.g. 4, 5, 6, or 8 side faces. Each one of the at least two side faces is oriented in a different direction. For example, the body may have two side faces facing oriented in opposing directions, i.e. the side faces may be parallel to each other but defining opposing sides of the body. The body, particularly the side faces, may comprise a plastic material. The body may encompass an inner space. Alternatively, the body may be a (monolithic) block having the at least two side faces. The body may be understood as a radar antenna body. The body may be made from a metal or metallized plastic material. The side faces may be flat or curved.

The system further comprises a separate radar subunit arranged on each one of the at least two side faces of the body. Each radar subunit comprises at least one transmitting (TX) channel, and at least one receiving (RX) channel. The channels may comprise respective antennas as known in the art. The TX and RX channels are adapted for performing radar measurements, as also known in the art. Each radar subunit may be adapted to function independently from the other radar subunits, for example to perform independent distance measurements or/and angular measurements. As the faces of the body are directed in different directions, the radar subunits arranged on the faces cover different sectors. With one TX channel and one RX channel, each subunit may be configured to detect the presence of an object in a sector covered by the respective subunit. With more than one Rx or more than one Tx the subunit is able to determine the angular position of an object.

It has been found that such a radar system is providing for an improved coverage around the vehicle. By arranging several radar subunits on different faces of the radar body, different (possibly partially overlapping) sectors can be covered providing for an improved azimuth FOV of the radar system. Due to the presence of RX and TX channels on each face, Direction-of-Arrival (DoA) measurements can be performed for different sectors.

Preferably, each one of the radar subunits is implemented using a (separate) monolithic microwave integrated circuit (MMIC), allowing for simplified construction of the radar system. The connections or feeding lines to/from MMIC to antennas for the radar subunits may be arranged in the inside of the radar body, improving durability of the system. In another embodiment, the radar subunits may be implemented using a single MMIC with the channels arranged on the different side faces of the body, i.e. the radar subunits may share a common MMIC.

Preferably, each one of the radar subunits has two RX channels. Such a configuration allows for performing DoA estimation. The two RX channels may be separated by 0,5λ, with λ being the operating wavelength of the radar subunit. This may provide for unambiguity of the radar measurements. Further preferred, each one of the radar subunits has three RX channels. Two of the RX channels may be separated by 2,5λ, and, as described above, the third of the RX channels may be separated from another RX channel by 0,5λ, to achieve maximum coverage for an unambiguous angle measurement and increase DOA accuracy at the same time. The number of channels/antennas per side face may be driven by the available number of channels of the implemented MMIC.

Preferably, the body has four side faces, wherein the four side faces form an essentially cubic shape of the body. Thus, the body may have a cubic structure, which is defined by the four side faces. The four side faces are oriented in different directions, with the directions differing by 90° or 180°. Thus, the main line of sight or boresights of the radar subunit are pointing in directions differing by 90° or 180°. In this manner, a 360° azimuth FOV can be covered with the radar system. Alternatively, the body may have more than four side faces forming a polygonal (e.g. hexagonal) shape of the body.

Preferably, the body has a top face which adjoins the edges of the at least two side faces. The top face may be oriented rectangular to the at least two side faces. The top face may close the body on its top side. Preferably, the radar system further comprises a control unit of the radar subunits which is arranged on the top face of the body. The control unit may be configured to control the radar subunits for performing radar measurements. The control unit may comprise a PCB board. The PCB board may be arranged on the inside of the radar body, on the top face of the radar body. The connections or feeding lines may run from the radar subunits to the control unit. The PCB board may have a hole or holes for connecting the radar system to a vehicle as described below.

Preferably, the body comprises a connection element adapted for attaching the body to a body of a vehicle. The connection element may be arranged on the top face of the body, and may comprise respective attachment means such that the radar system can be attached to the vehicle, especially at a bottom surface of the vehicle. By means of the connection element, the radar system may be mechanically fixed to the body of the vehicle. Further by means of the connection element, the radar system may be electrically connected to the electrical system of the vehicle in order to provide power to the radar system and to provide radar measurement data to a driver-assistance system of the vehicle.

Preferably, the body comprises a protection element arranged at a bottom side opposite of the connection element of the body. The protection element may define a bottom face of the body. The protection element is configured to protect the radar system mechanically from possible road hits, when installed in a vehicle. The protection element may comprise or consist of steel, for improved protection.

Preferably, the body comprises a core element which is arranged inside the body and which extends from the connection element to the protection element. The core element may comprise or consist of steel, for improved protection. Shocks due to possible road hits may be transferred from the protection element via the core element and connection element to the body of the vehicle, thereby protecting the radar subunits.

Preferably, the system comprises a housing (cover/cape), which is preferably a plastic housing. The housing may be electromagnetically transparent. The housing is preferably arranged such that the boresight of one of the radar subunits is incident on a surface of the plastic housing at the Brewster angle. The housing may provide for dust protection and may be fixed at the protection element and the vehicle surface. Brewster angle can be utilized for inclined side walls or conical side surface of the cape, in order to increase its transparency for radar radiation. The housing may be attached to the body of the radar system and/or to the vehicle.

Preferably, the radar system covers an azimuth field of view of at least 180°. For example, the radar system can have two radar subunits arranged on opposing sides of the housing each covering an azimuth field of view of more than 90°, resulting in an azimuth field of view of the radar system of more than 180°. Preferably the radar system covers an azimuth field of view of at least 270°, further preferred of at least 360°. This radar system can be used for parking assistance applications, as it does not have any blind zones.

Another aspect of the present disclosure relates to a vehicle comprising at least one radar system as described herein. The vehicle may be a motor vehicle. The vehicle may be equipped with more than one of the described radar systems. For example, the vehicle may comprise a first radar system installed in a front section of the vehicle, and a second radar system installed in a rear section of the vehicle. The data from the radar system(s) allows for improving the functionality of driver-assistance systems, particularly due to the extended azimuth FOV.

Preferably, the body of the radar system is integrated in a body of the vehicle. For example, the radar system may be integrated in a chassis or frame structure of the vehicle. This allows for a reliable fixation of the radar system to the vehicle.

Preferably, the vehicle comprises two radar systems as described herein, wherein the two radar systems are arranged on opposing sides of the vehicle. For example, a first radar system may be installed in a front section of the vehicle, while a second radar system may be installed in a rear section of the vehicle. In another example, a first radar system may be installed in a left side section of the vehicle, while a second radar system may be installed in a right side section of the vehicle. The radar systems are preferably installed at low height such that the area beneath the vehicle is in the FOV of the radar systems.

Preferably, the body is attached to a body of the vehicle at a location beneath a B-pillar of the vehicle, or beneath a front part or rear part of the vehicle bottom surface. With such a configuration, it is possible to detect objects in regions that are not covered by other common vehicle radar sensors. Preferably, the body is attached such that the radar system covers an area beneath the vehicle.

Preferably, the body of the radar system is attached to a body of the vehicle at a low edge of the body of the vehicle. The body of the vehicle, or coachwork, may be understood as the structure of the vehicle on its chassis. When the body of the radar system is attached at a low edge of the vehicle's body, it may be provided beneath the vehicle's body, or at least such that part of the body of the radar system is on the same level as the lowest part of the vehicle's body. For example, the radar body may be attached to the body of the vehicle such that it can cover an area beneath the vehicle. Alternatively or in addition, the body of the radar system may be attached to the body of the vehicle at least partially beneath a bottom surface of the vehicle. The bottom surface may be the bottom side of the vehicle's body. In this way, the area beneath the vehicle can be well covered by the radar system, which is of particular relevance for parking assistance systems.

Preferably, the body of the radar system is configured such that a main line of sight of one of the radar subunits is different from a horizontal plane. The body of the radar system -may be not installed on the vehicle such that the line of sight of each of the radar subunits is horizontal. By tilting the body or shaping it by tilting single subunits surfaces, or utilizing a conical shape etc., at least one of the radar subunits is having a line of sight pointing upwards or downwards. For example, the line of sight of one radar subunit located on an outer side (i.e. facing towards the outer surroundings of the vehicle) may be pointing upwards, which may allow for improved detection of other road users or traffic participants. Due to the elevation FOV of the radar subunit, objects on a street level (e.g. a curb) can still be detected by means of the radar subunit. The line of sight of one other radar subunit located on an inner side (i.e. facing away from the outer surroundings of the vehicle) may be pointing downwards, allowing for improved detection capabilities of small objects which may be located beneath the vehicle. The road surface under the vehicle may be utilized as a reflector for radar radiation to extend the coverage.

Preferably, the body of the radar system is tilted such that a main line of sight of one of the radar subunits is tilted by ±5 degrees, further preferred by ±10 degrees, further preferred by ±15 degrees, relative to a horizontal plane. Such tilting degrees provide for improved detection capabilities of the radar system.

Another aspect of the present disclosure relates to the arranged of a radar system at low height on a vehicle. The radar system may be a radar system as described herein, but may also be any other radar system. The radar system is preferably attached to a body of the vehicle at a low edge of the body of the vehicle. Preferably, the radar system is attached at least partially, preferably completely beneath a bottom surface of the vehicle. Preferably, the radar system is arranged such that its FOV covers the area beneath the vehicle at least partially. Preferably, the radar system is integrated into the body of the vehicle such that its FOV covers the area beneath the vehicle at least partially. In a preferred embodiment, the radar system is arranged such that a main line of sight of the radar system is different from a horizontal plane, further preferred by ±5 degrees, further preferred by ±10 degrees, further preferred by ±15 degrees.

Accordingly, one particular aspect of the present disclosure relates to a vehicle comprising a radar system, the system comprising: a body with at least one side face; and a radar subunit arranged on the at least one side face of the body, wherein the radar subunit comprises at least one TX channel and at least one RX channel, wherein the radar system is attached to a body of the vehicle at a low edge of the body of the vehicle and/or at least partially beneath a bottom surface of the vehicle.

### Description of preferred embodiments

In the following, the present invention is described in detail with reference to the figures. In the figures, similar elements are provided with the same reference signs.
Fig. 1 illustrates a radar system according to an embodiment of the present disclosure;
Fig. 2 illustrates a radar system according to another embodiment of the present disclosure;
Fig. 3 illustrates a vehicle according to another embodiment of the present disclosure;
Fig. 4 illustrates a radar system according to an embodiment of the present disclosure;
Fig. 5 illustrates a vehicle according to another embodiment of the present disclosure;
Fig. 6 illustrates a vehicle according to another embodiment of the present disclosure;
Fig. 7 illustrates a vehicle according to another embodiment of the present disclosure;
Fig. 8 illustrates a radar system according to another embodiment of the present disclosure.

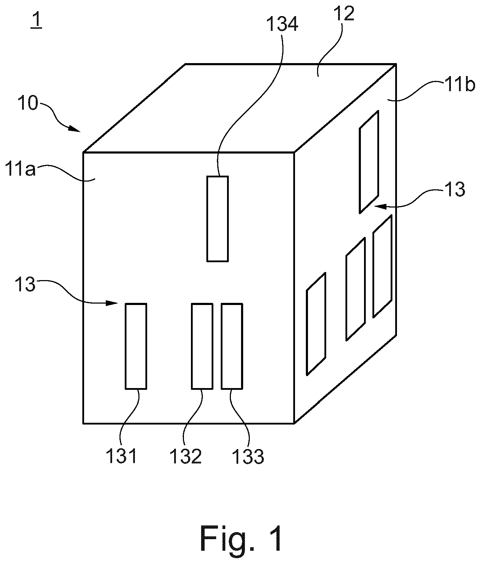

Figure 1 illustrates a radar system 1 according to an embodiment of the present disclosures. The radar system 1 can be installed as a single piece to a vehicle. The radar system 1 comprises a body 10. The body 10 may be attached to a body of a vehicle. The body 10 has a parallelepiped/cubical shape. The body 10 has four side faces, of which two side faces 11a, 11b are visible in Fig. 1. Each one of the four side faces adjoins two other side faces. In this manner, the four side faces define a cubic shape of the body 10. On top of the body, a top face 12 is provided. The side faces may be metallic and the top face 12 may be of a plastic material.

On each one or some of the four side faces, a radar subunit 13 is arranged. Each radar subunit 13 is configured for performing individual DOA measurements. Each radar subunit 13 comprises a TX antenna / channel 134, and three RX antennas /channels 131, 132, 133. The radar system 1 thus has 4 TX channels and 12 RX channels. These are each realized using MMIC(s). The RX antennas 131, 132, 133 are arranged parallel to each other. The distance between RX antennas 131, 132 is 2.5λ, with λ being the operating wavelength of the radar subunit. The distance between RX channels 132, 133 is 0.5λ. In particular embodiments, the distance between RX channels 132, 133 can be greater than 0.5λ, restricting the unambiguous range to less than 180° and causing blind spots in angular coverage, but relaxing challenges regarding antenna design and mutual coupling, or smaller than 0.5λ, enabling coverage beyond 180° if curved surfaces used instead of flat surfaces.

On the inner wall of the top face 12, a PCB board realizing a control unit of the radar subunits is arranged. Connections or feeding lines connecting the control unit with the radar subunits are arranged on the inside of the body 10.

Each one of the radar subunits 13 may have an azimuth FOV of about 160°. In case the surfaces 11a and 11b are curved, covering beyond 160° may be achieved. The azimuth FOV of neighboring radar subunits 13 is overlapping in edge sections, which allows for compensating the DoA accuracy in these sections.

In another embodiment, separate radar subunits 13 are provided on three different side faces. Such system may provide for an azimuth field of view of about 270°. On the fourth side of the rectangular housing, the control unit of the radar subunits is arranged.

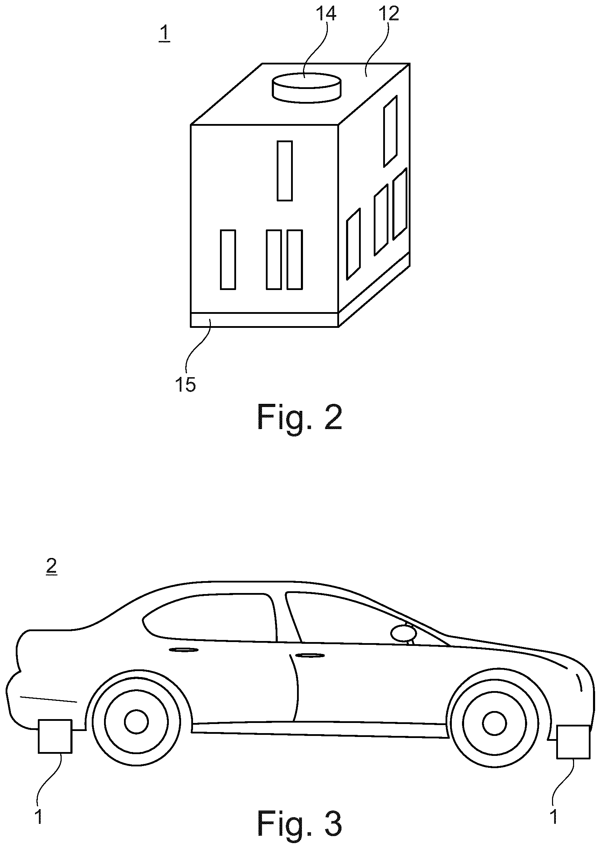

Figure 2 illustrates a radar system 1 according to another embodiment of the present disclosure. The radar system 1 is similarly to that of Fig. 1, but additionally includes a connection element 14 and a protection element 15. The connection element 14 is provided such that it reaches through the top face of the body 10. For example, an electronic control unit implemented as a PCB board may define the top side 12 of the body 10, and a hole (or holes) may be provided in the control unit such that the connection element 14 can reach through. The connection element 14 is configured for connecting the radar system 1 mechanically (e.g. by screws) and electrically to a vehicle, for example. The radar system 1 may be connected to the vehicle by means of a plug and play connection in order to facilitate replacement of the radar system 1, in case of failure of the radar system 1. The protection element 15 forms a lower face of the body, enclosing the inner side of the body. The protection element 15 is of steel and protects the system against possible road bottom hits. Further, inside the body 10, a core element (not visible) is provided which is embodied as a steel cylinder extending from the protection element 15 to the connection element 14. The core element can have the same cylindrical shape as the connection element 14 shown in Fig. 2, but a larger height in order to extend from the connection element 14 to the protection element 15. In particular embodiments, the core element, the connection element 14 and/or the protection element 15 may be integrally formed.

Figure 3 illustrates a vehicle 2 according to another embodiment of the present disclosure. The vehicle 2 comprises two radar systems 1 (schematically illustrated in Fig. 3), with one radar system installed in a front section of the vehicle 2, and the other radar system being installed in a rear section of the vehicle 2. The radar systems are installed at low edge of the body of the vehicle 2, and are partly located beneath the bottom surface of the vehicle 2. The radar systems are arranged behind a housing, with the housing material being optimized with respect to its dielectric properties to limit the effect of the housing on the radar functionality. Further, the housing is designed such that the incidence angle is around 60° (for making use of the Brewster angle). The radar systems may be integrated into the car skin at a low height. The car skin or fascia may function as the housing of the radar systems. In particular embodiments, the housing may have a conical side wall covering the radar body from the bottom side. The conical wall may be tilted by around 60° (relative to a vertical vector) to utilize the Brewster angle such that only a vertical polarization provides, for increased transparency of the housing. Such a housing may provide for improved aerodynamic properties, and protect the system against dust accumulation. The housing may be fixed to the protection element 15 (cf. Fig. 2), to also protect it from corrosion. Such a housing may further be connected to the bottom floor of the vehicle, beneath which the body is attached to.

Each radar system 1 of the vehicle has four side faces and thus four radar subunits, as illustrated in Fig. 1 or Fig. 2. The bodies of the radar systems 1 are oriented such that the sight of views of the radar subunits are pointing in a forward, rear, left and right direction of the vehicle. With such a configuration, the near surroundings and the space beneath the vehicle 2 can be well monitored.

With the configuration shown in Fig. 3, an improved coverage by the radar systems 1 is provided. The near surrounding areas of the vehicle 2 as well as the area beneath the vehicle 2 are covered by the radar systems 1, such that the vehicle 2 can be provided with an evolved parking assistance system.

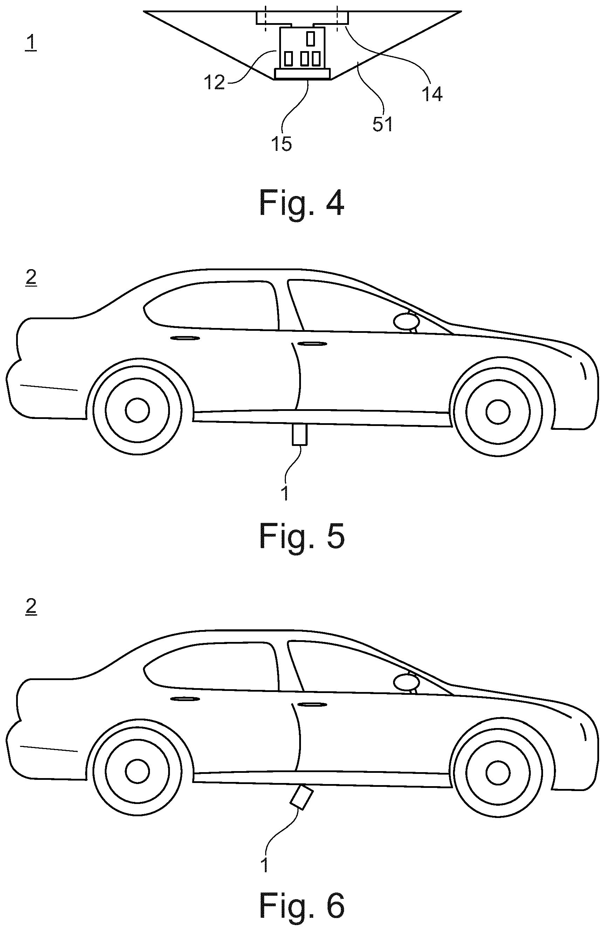

Figure 4 illustrates one (preferably each) of the radar systems 1 as implemented in the embodiment illustrated in Fig. 3. The radar subunit is arranged behind a housing 51 which is configured such that it is sufficiently transparent for the radar signals. For this purpose, the housing surfaces are angled such that the boresight of the radar subunits are incident on the housing surfaces at the Brewster angle.

Figure 5 illustrates a vehicle 2 according to another embodiment of the present disclosure. In contrast to the embodiment of Fig. 3, a radar system 1 is provided on each side of the vehicle beneath the B-pillars of the body of the vehicle. The radar bodies are arranged beneath a bottom surface of the vehicle 2. The radar bodies of the radar systems 1 are not tilted, such that the sight of view of each subunit of each radar system 1 is on the horizontal plane. Due to the arrangement of the radar systems 1 completely under the vehicle floor, the entire room beneath the vehicle 2 can be monitored with the radar systems 1. The bodies of the radar systems are oriented such that the sight of views of the radar subunits are pointing in a forward, rear, left and right direction of the vehicle.

Figure 6 illustrates a vehicle 2 according to another embodiment of the present disclosure. Similar to the embodiment of Fig. 5, a radar system 1 is provided on each side of the vehicle beneath the B-pillars of the body of the vehicle. Contrary to the embodiment of Fig. 5, the bodies of the radar systems are tilted. Accordingly, the sight of view of at least one subunit of each radar system is not on the horizontal plane. This allows for configuring a desired FOV of the radar systems.

In a preferred embodiment, a radar system installed on a side section of the vehicle (for example beneath a B-pillar, as illustrated in Figs. 5 and 6) is installed such that the body is tilted around a longitudinal axis of the vehicle. Thus, the line of sights of the radar subunits facing the forward and rear directions of the vehicle 2 are on the horizontal plane. The line of sights of the radar subunits facing the left and right directions of the vehicle 2 are tilted upwards and downwards, or vice versa. Preferably, the radar subunits facing the space beneath the vehicle 2 is tilted downwards, to improve detection of objects on the road and beneath the vehicle 2. In this embodiment, the radar subunits facing the outside of the vehicle 2 is tilted upwards, to improve detection of other vehicles, objects, pedestrians, etc.

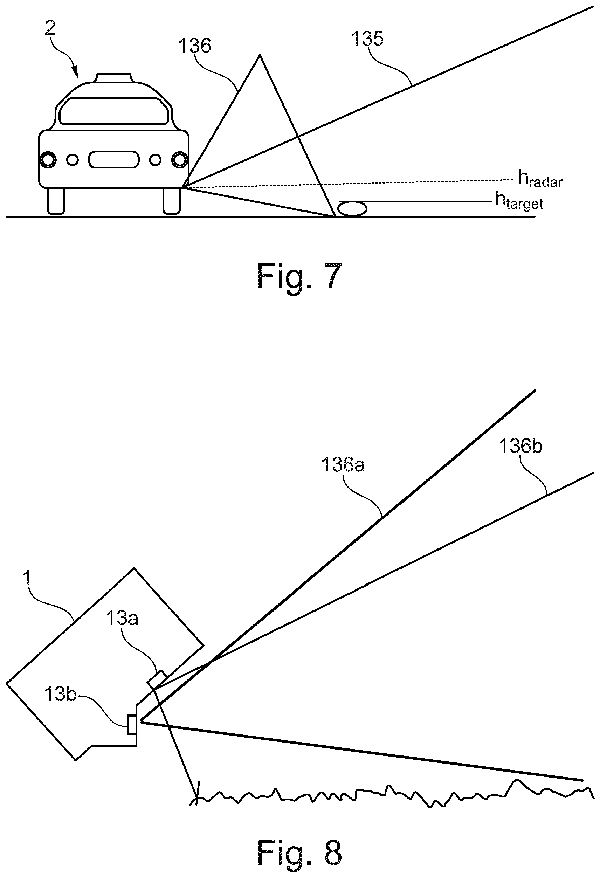

Figure 7 illustrates a vehicle 2 according to another embodiment of the present disclosure. The vehicle 2 comprises a radar system 1 installed under the vehicle's bottom surface, at a position beneath one of the vehicle's B-pillar. It will be appreciated that the vehicle 2 may comprise further radar systems 1.

The radar system 1 is installed such that its body is tilted around a longitudinal axis of the vehicle 2, or a non-vertical shape like a conical shape can also be utilized. The radar subunit facing the outside of the vehicle 2 is tilted upwards, i.e. the line of sight 135 of this radar subunit is tilted upwards with respect to a horizontal plane. The radar body is installed at such height (h_{radar}) and tilted such that the height of a particular target, e.g. a curb (h_{target}) being at typical lateral distance to the vehicle 2, is still in the FOV 136 of the radar system. The tilting angle may be between ¼ and ¾ of the FOV extension downward from the radar subunit's line of sight. This may allow for detecting also low height objects close to the vehicle.

In another embodiment, in contrast to the embodiment of Fig. 7, the radar system may be tilted in the opposed direction such that the line of sight of the radar subunit facing the outside of the vehicle is tilted downwards with respect to a horizontal plane. In such configuration, the road surface may act as a mirror for the radar signals, eventually improving the FOV to allow for monitoring targets of different height in the surrounding of the vehicle.

Figure 8 illustrates a radar system 1 according to another embodiment of the present disclosure. The radar system comprises a first radar subunit 13a on a side face of the radar body, and a further radar subunit 13b that is oriented such that it covers the same azimuth FOV, but a different elevation FOV. In an alternative embodiment, both radar subunits 13a, 13b may be arranged on the same side face of the radar body, with nearly identical azimuth and elevation FOVs. By comparing the signals between the radar subunits 13a, 13b, the road surface can be analyzed in order to determine the type of road (gravel, concrete, etc.). Further, it is possible to filter out road backscattering signals when monitoring for targets. The radar subunits 13a, 13b may work with the same or different polarizations, as will be appreciated by the skilled person.

The provision of a radar system with several radar subunits facing in different directions allows for extending the azimuth FOV of the radar system to more than 180°. This is of particular advantage for monitoring the close surroundings of a vehicle, for example in the context of parking assistance applications.

By installing a radar system at low height of a vehicle, or completely under the vehicle floor, close range objects that may even be beneath the vehicle can be reliably detected by means of the radar system. The elevation FOV can be narrow to optimally cover the area below the vehicle and close to the road surface around the vehicle, with minimal interference from radar reflection from the road.

By tilting the radar systems, the elevation FOV can be adjusted as desired with regard to the particular application. For example, the elevation FOV can be adjusted such that the area beneath the vehicle is optimally covered, as well as the surroundings of the vehicle. By using the road surface (below or next to the vehicle) as a mirror for the radar signals, the covering area of the radar system can be extended such that higher objects in the surrounds of the vehicle can be detected.

## Claims

1. Radar system (1) for automotive applications, in particular for a driver-assistance system of a vehicle (2), the system (1) comprising:
a body (10) with at least two side faces (11a, 11b), wherein each one of the at least two side faces (11a, 11b) is oriented in a different direction; and
a separate radar subunit (13) arranged on each one of the at least two side faces (11a, 11b) of the body (10), wherein each radar subunit (13) comprises at least one transmitting, TX, channel and at least one receiving, RX, channel.

2. The system (1) of claim 1, wherein each one of the radar subunits (13) is implemented using a monolithic microwave integrated circuit, MMIC.

3. The system (1) of claim 1 or 2, wherein each one of the radar subunits (13) has at least two RX channels, preferably at least three RX channels.

4. The system (1) of any one of claims 1-3, wherein the body (10) has four side faces (11a, 11b), wherein the four side faces (11a, 11b) form an essentially cubic shape of the body (10).

5. The system (1) of any one of claims 1-4, wherein the body (10) has a top face which adjoins the edges of the at least two side faces (11a, 11b), the system further comprising a control unit of the radar subunits (13) arranged on the top face.

6. The system (1) of any one of claims 1-5, wherein the body (10) comprises a connection element (14) adapted for attaching the body (10) to a body of a vehicle.

7. The system (1) of claim 6, wherein the body (10) comprises a protection element (15) arranged at a bottom side opposite of the connection element (14) of the body (10).

8. The system (1) of claim 7, wherein the body (10) comprises a core element which is arranged inside the body (10) and which extends from the support element (14) to the protection element (15).

9. The system (1) of any one of claims 1-8, comprising a housing (51), preferably a plastic housing, which is arranged such that the boresight of one of the radar subunits (13) is incident on a surface of the housing (51) at the Brewster angle.

10. The system (1) of any one of claims 1-9, wherein the radar system (1) covers an azimuth field of view of at least 180°, preferably of at least 270°, further preferred of at least 360°.

11. Vehicle comprising (2) at least one radar system (1) according to any one of claims 1-10, wherein the body (10) of the radar system (1) is preferably integrated in a body of the vehicle.

12. The vehicle (2) of claim 11, comprising at least two radar systems (1) according to any one of claims 1-9, wherein the two radar systems (1) are arranged on opposing sides of the vehicle (2).

13. The vehicle (2) of claim 11 or 12, wherein the body (10) of the radar system (1) is attached to a body of the vehicle at a low edge of the body of the vehicle (2) and/or at least partially beneath a bottom surface of the vehicle (2).

14. The vehicle (2) of any one of claims 11-13, wherein the body (10) of the radar system (1) is configured such that a main line of sight (135) of one of the radar subunits (13) is different from a horizontal plane,
wherein the body (10) of the radar system (1) is preferably tilted such that a main line of sight of (135) one of the radar subunits (13) is tilted by ±5 degrees, further preferred by ±10 degrees, further preferred by ±15 degrees, relative to a horizontal plane.

15. Vehicle comprising a radar system (1), the system (1) comprising:
a body (10) with at least one side face (11a, 11b); and
a radar subunit (13) arranged on the at least one side face (11a, 11b) of the body (10), wherein the radar subunit (13) comprises at least one transmitting, TX, channel and at least one receiving, RX, channel,
wherein the radar system (1) is attached to a body of the vehicle at a low edge of the body of the vehicle (2) and/or at least partially beneath a bottom surface of the vehicle (2).
